# FASCICULE DE BREVET EUROPEEN

(11) **EP 3 996 056 B1**
(45) Date de publication et mention de la délivrance du brevet: **27.08.2025**
(21) Numéro de dépôt: 21202688.4
(22) Date de dépôt: 14.10.2021
(51) Int. Cl.: G07C 5/00, G07C 5/08, B64F 5/60

(54) **ARCHITECTURE DE SURVEILLANCE D AU MOINS UN AERONEF ET PROCEDE DE SURVEILLANCE ASSOCIE**
ARCHITEKTUR ZUR ÜBERWACHUNG MINDESTENS EINES LUFTFAHRZEUGS UND ENTSPRECHENDES ÜBERWACHUNGSVERFAHREN
ARCHITECTURE FOR MONITORING AT LEAST ONE AIRCRAFT AND ASSOCIATED MONITORING METHOD

(30) Priorité: 04.11.2020 FR 2011324
(43) Date de publication de la demande: 11.05.2022
(73) Titulaire: Airbus Helicopters, 13725 Marignane Cedex (FR)
(72) Inventeur: VICQ, Alexandre, 13004 MARSEILLE (FR); PEREZ, Frédéric, 13012 MARSEILLE (FR)
(74) Mandataire: GPI Brevets

(56) Documents cités:
- EP-A1- 2 991 044
- US-A1- 2011 106 366
- US-A1- 2015 187 146
- US-A1- 2016 016 671

## Description

La présente invention concerne le domaine technique des architectures de systèmes d'information ou d'aide permettant de surveiller, de planifier et de faciliter la maintenance d'un aéronef, voire d'une flotte d'aéronefs. De tels aéronefs peuvent être formés par exemple par des avions, des giravions et éventuellement des hélicoptères.

Généralement et tel que décrit par le document FR 3 064 088, les architectures de surveillance peuvent alors comporter un ou plusieurs aéronefs et un équipement électronique mobile qui est mobile par rapport à un aéronef.

Un équipement électronique mobile est alors apte à collecter des données avioniques générées par différents capteurs lors de l'utilisation d'un aéronef. En outre, un tel équipement électronique mobile est par exemple formé par une tablette tactile, un smartphone ou encore un ordinateur portable, voire une unité centrale amovible d'un ordinateur alimentée par l'aéronef.

De telles données avioniques sont par exemple générées lors d'une phase de vol de l'aéronef à partir de capteurs mesurant les variations d'un paramètre d'état telle la tension ou l'intensité d'un signal électrique parcourant ces capteurs. De tels capteurs peuvent ainsi permettre de réaliser des mesures d'un paramètre physique tel que par exemple les variations de la position ou de l'altitude de l'aéronef, de la pression ou de la température d'un fluide circulant dans l'aéronef, des vibrations auxquelles est soumis un organe de l'aéronef, la quantité de carburant présente dans le ou les réservoirs, etc....

Ces données avioniques sont ensuite transmises à une station sol et/ou à une infrastructure informatique en nuage.

Une fois transmises, à l'infrastructure informatique en nuage, de telles données avioniques peuvent alors être décodées, traitées puis standardisées ou valorisées afin d'être transmises à nouveau vers l'équipement électronique mobile puis utilisées par un opérateur en charge de la surveillance ou de la maintenance d'un aéronef.

Le document EP 0927933 décrit des architectures de surveillance permettant de s'adapter à un équipement en phase de tests.

Cependant, ces architectures de surveillance nécessitent constamment que les équipements électroniques mobiles soient connectés à l'infrastructure informatique en nuage pour pouvoir être utilisés.

Le document EP 2 991 044 A1 se rapporte à un système et un procédé de surveillance de systèmes de véhicule à l'aide de dispositifs mobiles, tels un téléphone, une tablette, un ordinateur...

En outre, un tel procédé permet une présentation d'informations relatives à l'état de santé d'un ou de plusieurs éléments mécaniques d'un giravion.

En outre, un dispositif client 120 tel que par exemple un téléphone portable est relié par une connexion sans fil « point à point » avec un système de surveillance 104 agencé à bord du giravion. Le système de surveillance 104 reçoit les données brutes d'au moins un capteur 106 et peut générer des informations de santé à partir des données brutes.

Ce document EP 2 991 044 A1 décrit également l'utilisation d'un serveur 130 qui peut être connecté au dispositif client 120, éventuellement via un réseau 116. Le dispositif client 120 fait alors office de liaison de communication avec le système de surveillance 104 installé sur le giravion et peut lui transmettre aussi bien les informations de santé que les données brutes.

En outre, le serveur 130 peut comporte un ou plusieurs ordinateurs serveurs ou autre(s) dispositif(s) couplé(s) au réseau 116.

Le serveur 130 peut par exemple être formé par des serveurs matériels dédiés ou partagés et peut aussi utiliser des fonctionnalités de serveur virtuel dans le cadre d'un service de « cloud computing ».

Cependant, le document EP 2 991 044 A1 ne décrit pas que le dispositif client 120 comporte un organe d'analyse configuré pour mettre en œuvre des modes de fonctionnement local et connecté conformes à l'invention.

En effet, l'information de santé est générée par le système de surveillance 104 embarqué dans l'aéronef. Aucune analyse n'est ainsi opérée par le dispositif client 120 pour générer une information de santé.

Le document US 2011 / 106366 A1 décrit quant à lui un terminal de maintenance mobile pouvant être utilisé en opération ou lorsqu'un aéronef est à sa base. En outre, lorsque l'aéronef est en opération l'opérateur ne peut avoir accès qu'aux données avioniques pour effectuer un diagnostique de maintenance.

En outre, des données peuvent être transmises directement d'un aéronef 100 à un système d'information de maintenance d'une compagnie aérienne 115, par exemple à travers un lien de type IP. Ces données peuvent être traitées par les systèmes d'information de maintenance pour le suivi de l'état de la flotte d'aéronefs. En outre, ces données permettent de capitaliser l'expérience acquise au cours de l'exploitation des aéronefs et ainsi d'optimiser les opérations de maintenance.

Le document US 2015 / 187 146 A1 concerne quant à lui un système de diagnostic de véhicule à distance qui utilise un smartphone comme un moyen de communication centralisé entre un véhicule et plusieurs ressources à distance.

Le système comprend une application téléchargeable sur le smartphone pour programmer le téléphone afin d'exécuter la fonctionnalité souhaitée. L'application pour smartphone peut permettre au smartphone de fonctionner dans plusieurs modes différents, comportant un mode de diagnostic et un mode d'urgence.

En mode diagnostic, le smartphone peut relayer les données du véhicule à un centre de diagnostic à distance.

Le smartphone peut également interroger l'utilisateur pour obtenir des informations de diagnostic symptomatique, qui peuvent également être téléchargées vers le centre de diagnostic à distance.

En mode d'urgence, le smartphone peut être configuré pour télécharger des informations critiques vers un centre de diagnostic à distance, ainsi qu'un centre d'intervention d'urgence. Le mode d'urgence peut être déclenché automatiquement en réponse à un accident du véhicule, ou alternativement, mais par actionnement de l'utilisateur.

Le document US 2016 / 016 671 A1 se rapporte au domaine de l'avionique, et en particulier celui du traitement des messages d'alarmes et de maintenance d'un aéronef. Il décrit quant à lui un procédé mis en œuvre par ordinateur de gestion de messages d'alarmes et de maintenance d'un aéronef et une autre architecture de surveillance éloignée de l'invention.

La présente invention a alors pour objet de proposer une architecture alternative de surveillance et d'aide à la maintenance innovante. En outre, une telle infrastructure permet un processus administratif de certification plus simple à mettre en œuvre et donc de limiter les coûts de fabrication et de certification de cette infrastructure, notamment lors de modifications ou de mises à jour ultérieures.

L'invention se rapporte donc à une architecture de surveillance d'au moins un aéronef, l'architecture comportant :
- ledit au moins un aéronef muni d'un système avionique configuré pour générer des données avioniques lors d'une utilisation d'un aéronef, le système avionique comportant une unité de stockage configurée pour stocker les données avioniques,
- un équipement électronique mobile comportant :
   - une première interface de communication configurée pour recevoir des données primaires comportant au moins les données avioniques,
   - une deuxième interface de communication configurée pour émettre les données primaires,
- une infrastructure informatique en nuage comportant :
   - une troisième interface de communication configurée pour recevoir les données primaires émises par la deuxième interface,
   - au moins une mémoire externe stockant un historique des données primaires du au moins un aéronef, chacune des au moins une mémoire externe étant associée respectivement à chacun des au moins un aéronef,
   - une unité de traitement configurée pour traiter les historiques des données primaires stockées dans la au moins une mémoire externe, l'unité de traitement générant des données valorisées, et
   - une quatrième interface de communication contigurèe pour émettre les données valorisées, l'historique des données primaires contenues dans la au moins une mémoire externe,
   - une cinquième interface de communication configurée pour recevoir les données valorisées et l'historique des données primaires,
   - un organe d'analyse, et
   - un alerteur configuré pour afficher au moins une information de surveillance.

Selon l'invention, une telle architecture est remarquable en ce que l'équipement électronique mobile comporte :
- une mémoire interne configurée pour stocker les données valorisées,
et en ce que l'organe d'analyse et l'alerteur sont configurés pour mettre en œuvre des modes suivants :
- dans un mode de fonctionnement local, l'organe d'analyse est configuré pour analyser les données valorisées contenues dans la mémoire interne et générer une information de santé du ou des aéronefs, l'information de santé consistant soit en une autorisation de décollage du ou des aéronefs, soit en une interdiction de décollage du ou des aéronefs, la au moins une information de surveillance étant l'information de santé, et
- dans un mode de fonctionnement connecté de l'équipement électronique mobile durant lequel l'équipement électronique mobile est connecté à l'infrastructure informatique en nuage, l'organe d'analyse est configuré pour analyser les données valorisées contenues dans la mémoire interne et l'historique des données primaires stockées dans la au moins une mémoire externe et pour générer une information de maintenance prédictive du ou des aéronefs, l'information de surveillance étant l'information de maintenance prédictive.

Autrement dit, un tel équipement électronique mobile peut être utilisé selon deux modes de fonctionnement distincts l'un de l'autre, au choix d'un opérateur via l'utilisation d'une interface homme-machine.

Dans le mode de fonctionnement local, l'équipement électronique mobile n'est donc pas connecté à l'infrastructure informatique en nuage. Cependant dans ce cas, l'organe d'analyse de l'équipement électronique mobile peut analyser les données valorisées précédemment stockées dans la mémoire interne de l'équipement électronique mobile. Dans ce mode de fonctionnement local, l'organe d'analyse peut également, à partir de ces données valorisées, générer ou calculer d'autres données valorisées et les stocker dans la mémoire interne. La mémoire interne permet ainsi mémoriser, dans le mode de fonctionnement local, des données valorisées précédemment générées par l'unité de traitement de l'infrastructure informatique en nuage ou encore par l'organe d'analyse.

Un tel organe d'analyse peut notamment comporter au moins un processeur et au moins une mémoire, au moins un circuit intégré, au moins un système programmable, au moins un circuit logique, ces exemples ne limitant pas la portée donnée à l'expression « organe d'analyse ». Le terme processeur peut désigner aussi bien une unité centrale de traitement connue sous l'acronyme CPU, une unité graphique de traitement GPU, une unité digitale connue sous l'acronyme DSP, un microcontrôleur...

De même, l'unité de traitement peut notamment comporter au moins un processeur et au moins une mémoire, au moins un circuit intégré, au moins un système programmable, au moins un circuit logique, ces exemples ne limitant pas la portée donnée à l'expression « unité de traitement ».

Les capteurs permettant de générer les données avioniques peuvent comporter par exemple :
- un ou plusieurs accéléromètres,
- un ou plusieurs tachymètres,
- un ou plusieurs systèmes d'acquisition véhicule,
- un ou plusieurs capteurs de vitesse,
- un ou plusieurs capteurs de pression huile,
- un ou plusieurs capteurs de températures,
- un ou plusieurs capteurs de contact d'un train d'atterrissage et/ou de patins de l'aéronef,
- un ou plusieurs récepteurs de localisation par satellites de l'aéronef,
- un ou plusieurs capteurs de l'attitude de l'aéronef,
- un ou plusieurs capteurs d'une altitude barométrique de l'aéronef,
- une ou plusieurs radiosondes fournissant une hauteur de l'aéronef par rapport au sol survolé.

En outre, les données primaires peuvent comporter, en plus des données avioniques, des données opérationnelles telles que par exemple :
- une ou plusieurs données élaborées en embarqué telles que des compteurs, des cycles, des alarmes et des alertes,
- un ou plusieurs codes de pannes du système avionique fournis par le système avionique,
- une ou plusieurs vitesses de rotation liées aux ensembles dynamiques et aux moteurs de l'aéronef, telles qu'une vitesse d'un arbre de sortie d'un moteur, une vitesse de rotation d'un rotor,
- une ou plusieurs données de couple et de charge,
- une ou plusieurs données environnementales et de contexte,
- une ou plusieurs données vibratoires générées à partir des mesures issues d'un ou plusieurs accéléromètres.

Les données valorisées sont quant à elles réalisées au sol soit dans l'infrastructure informatique en nuage ou soit dans l'équipement électronique mobile et donc en dehors du système avionique embarqué dans l'aéronef.

Par conséquent, aussi bien dans le mode de fonctionnement local que dans le mode de fonctionnement connecté, les calculs ou méthodes permettant de générer et d'analyser les données valorisées peut être mis à jour très simplement sans nécessiter une nouvelle certification de l'architecture.

Dans le mode de fonctionnement connecté, une connexion l'équipement électronique mobile à l'infrastructure informatique en nuage peut ainsi permettre de mettre à jour les procédés d'analyse générant ensuite l'information de santé dans le mode de fonctionnement local ou l'information de maintenance prédictive dans le mode de fonctionnement connecté.

De telles données valorisées peuvent comporter par exemple :
- une ou plusieurs données de diagnostic,
- une ou plusieurs alarmes calculées au sol,
- une ou plusieurs alarmes anticipées,
- une ou plusieurs recommandations à destination de personnels habilités tels que :
   ▪ des opérateurs de maintenance,
   ▪ des professionnels en charge de la gestion de la navigabilité de l'aéronef,
   ▪ des gestionnaire HUMS pour la désignation en langue anglaise « Health and Usage Monitoring System »,
   ▪ des personnels en charge des opérations...

L'expression « infrastructure informatique en nuage » désigne une infrastructure décentralisée et hautement disponible également connue sous l'expression anglaise de « cloud computing ». Une telle infrastructure est dite décentralisée car elle fournit un modèle de stockage en réseau dans lequel les données avioniques et les données opérationnelles peuvent être stockées sur de multiples machines. Cette infrastructure informatique en nuage peut en outre être qualifiée de « propriétaire » dans la mesure où elle est administrée par le fabriquant du ou des aéronefs. Le client ou l'utilisateur du ou des aéronefs n'est donc pas habilité à connaitre le fonctionnement ou l'organisation de l'infrastructure. De même, l'accès aux contenus des différentes mémoires externes et donc aux données primaires est administré par le propriétaire de l'infrastructure informatique en nuage.

En outre, dans le mode de fonctionnement connecté de l'équipement électronique mobile, l'organe d'analyse de l'équipement électronique mobile peut analyser les données valorisées précédemment stockées dans la mémoire interne de l'équipement électronique mobile mais également l'historique des données primaires contenues dans la mémoire externe.

La deuxième interface et la cinquième interface de communication peuvent éventuellement être confondues entre elles et être formées par exemple par une carte réseau apte à communiquer selon un protocole de communication sans fil avec respectivement la troisième et la quatrième interfaces de communication. Un tel protocole de communication sans fil peut notamment être un protocole de téléphonie mobile tel que par exemple un protocole GSM acronyme désignant l'expression en langue anglaise « Global System for Mobile Communications » ou un protocole de type Wi-Fi.

Une telle architecture est en outre simple à utiliser et peut permettre à un même opérateur de réaliser à la fois des diagnostiques de santé d'un aéronef en particulier et des diagnostiques de maintenance prédictive pour ce même aéronef.

Avantageusement, l'unité de stockage du système avionique peut être amovible par rapport à un ou aux aéronefs.

En d'autres termes, une fois l'aéronef posé, l'unité de stockage peut être désolidarisée et escamotée de l'aéronef pour permettre le transfert des données avioniques à la première interface de communication de l'équipement électronique mobile.

Selon un exemple de réalisation particulier, l'unité de stockage peut être formée par une carte mémoire, la première interface comportant un lecteur de carte mémoire complémentaire avec la carte mémoire.

Ainsi, une fois un aéronef posé, un opérateur peut extraire la carte mémoire de l'aéronef et l'introduire dans un lecteur de carte de l'équipement électronique mobile. Les données avioniques peuvent alors être transférées par l'équipement électronique mobile vers l'infrastructure informatique en nuage.

En pratique, le système avionique de chaque aéronef peut comporter une sixième interface de communication configurée pour émettre les données avioniques, la première interface comportant une antenne configurée pour recevoir selon un protocole de communication sans fil les données avioniques émises par la sixième interface.

Autrement dit, en parallèle de l'utilisation d'une carte mémoire pour transmettre les données avioniques à l'équipement électronique mobile, une connexion utilisant un protocole de communication sans fil peut également être utilisée. La sixième interface peut alors comporter une première carte réseau pour communiquer avec l'équipement électronique. Un tel protocole de communication peut notamment être un protocole de type Wi-Fi ou Bluetooth.

Avantageusement, l'architecture peut comporter au moins une station sol comportant une septième interface de communication configurée pour recevoir les données primaires émises par la deuxième interface.

Par suite, en plus de l'infrastructure informatique en nuage, la ou les stations sol peuvent également permettre de collecter les données primaires émises par la deuxième interface.

Selon un exemple de réalisation particulier, la ou les stations sol peuvent comporter une huitième interface de communication configurée pour émettre les données primaires, la troisième interface étant configurée pour recevoir les données primaires émises par la huitième interface.

Dans ce cas, la ou les stations sol peuvent servir d'intermédiaire pour la transmission des données primaires entre l'équipement électronique mobile et l'infrastructure informatique en nuage.

En pratique, la septième interface peut comporter une antenne sol configurée pour recevoir selon un protocole de communication sans fil les données primaires émises par la deuxième interface.

En outre, la septième interface et la huitième interface de communication peuvent également être confondues entre elles et être formées par exemple par une carte réseau apte à communiquer selon un protocole de communication sans fil avec respectivement la deuxième et la troisième interfaces de communication. Un tel protocole de communication sans fil peut notamment être un protocole de téléphonie mobile tel que par exemple un protocole GSM acronyme désignant l'expression en langue anglaise « Global System for Mobile Communications » ou un protocole de type Wi-Fi.

Avantageusement, la troisième interface peut comporter au moins une antenne externe configurée pour recevoir selon un protocole de communication sans fil les données avioniques émises par la sixième interface.

Autrement dit, dans ce cas les données avioniques peuvent être directement transmises via un protocole de communication sans fil de l'aéronef à l'infrastructure informatique en nuage. La sixième interface peut alors comporter une seconde carte réseau pour communiquer avec l'infrastructure informatique en nuage. Un tel protocole de communication peut notamment être un protocole de téléphonie mobile tel que par exemple un protocole GSM acronyme désignant l'expression en langue anglaise « Global System for Mobile Communications », un protocole GPRS acronyme désignant l'expression en langue anglaise « General Packet Radio Service », un protocole UMTS acronyme désignant l'expression en langue anglaise « Universal Mobile Telecommunications System », etc ...

En pratique, l'équipement électronique mobile peut comporter un moyen de saisie configuré pour permettre à un opérateur de saisir au moins une opération de maintenance, l'organe d'analyse étant configuré pour convertir la au moins une opération de maintenance en données opérationnelles.

Ainsi, les données primaires transmises à l'infrastructure informatique en nuage peuvent également comporter ces données opérationnelles générées par l'organe d'analyse de l'équipement électronique mobile.

La présente invention a aussi pour objet un procédé de surveillance d'au moins un aéronef, le procédé comportant les étapes suivantes:
- génération de données avioniques lors d'une utilisation du ou des aéronefs,
- enregistrement des données avioniques dans une unité de stockage embarquée sur le ou les aéronefs,
- transmission de données primaires comportant au moins les données avioniques contenues dans l'unité de stockage vers un équipement électronique mobile,
- transmission des données primaires vers une infrastructure informatique en nuage,
- enregistrement dans au moins une mémoire externe de l'infrastructure informatique en nuage d'un historique des données primaires du au moins un aéronef, chacune des au moins une mémoire externe étant associée respectivement à chacun des au moins un aéronef,
- traitement de l'historique des données primaires pour générer des données valorisées, et
- transmission des données valorisées depuis l'infrastructure informatique en nuage vers l'équipement électronique mobile.

Selon l'invention, un tel procédé est remarquable en ce qu'il comporte les étapes suivantes :
- stockage des données valorisées dans une mémoire interne de l'équipement électronique mobile,
- dans un mode de fonctionnement local de l'équipement électronique mobile, analyse locale des données valorisées contenues dans la mémoire interne et génération locale d'une information de santé du ou des aéronefs, l'information de santé consistant soit en une autorisation de décollage du ou des aéronefs, soit en une interdiction de décollage du ou des aéronefs,
- dans un mode de fonctionnement connecté de l'équipement électronique mobile durant lequel l'équipement électronique mobile est connecté à l'infrastructure informatique en nuage, transmission de l'historique des données primaires contenues dans la au moins une mémoire externe vers l'équipement électronique mobile, analyse connectée des données valorisées contenues dans la mémoire interne et de l'historique des données primaires stockées dans ladite au moins une mémoire externe et génération connectée d'une information de maintenance prédictive du ou des aéronefs, et
- affichage à un opérateur d'au moins une information de surveillance, dans le mode de fonctionnement local la au moins une information de surveillance étant l'information de santé et dans le mode de fonctionnement connecté la au moins une information de surveillance étant l'information de maintenance prédictive.

Par conséquent, un tel équipement électronique mobile peut être utilisé par un opérateur au choix dans le mode de fonctionnement local et dans le mode de fonctionnement connecté.

En outre, dans le mode de fonctionnement connecté, l'information de maintenance prédictive peut être affichée pour indiquer une échéance d'intervention de maintenance visant à remplacer un fluide, tel une huile ou un liquide de refroidissement, ou encore une pièce de l'aéronef ayant atteint un seuil d'heures de fonctionnement.

L'opérateur peut ainsi planifier une intervention de maintenance de l'aéronef en fonction d'une utilisation future de l'aéronef, ou encore peut interdire le vol. Un tel procédé de surveillance permet ainsi de prévoir des opérations de maintenance lorsque l'aéronef n'est pas utilisé et/ou de limiter au maximum l'immobilisation de l'aéronef.

En outre, un tel procédé de surveillance est également avantageux car il permet d'adapter l'information de maintenance prédictive en fonction de l'historique des données primaires et donc d'une utilisation réelle de l'aéronef et/ou des conditions de vol qui peuvent avoir un impact non négligeable sur la fréquence des opérations de maintenance à effectuer.

L'étape de traitement permettant de générer des données valorisées peut comporter par exemple les sous-étapes suivantes :
- lecture des données primaires stockées dans l'unité de stockage embarquée, par exemple une carte mémoire,
- décodage des données primaires pour permettre leur utilisation par un logiciel de valorisation, et
- production des données valorisées en utilisant le logiciel de valorisation comportant un ou plusieurs algorithmes de valorisation.

Par ailleurs, le procédé de surveillance peut comporter une étape de saisie d'au moins une opération de maintenance par un opérateur sur l'équipement électronique mobile, la ou les opérations de maintenance étant converties en données opérationnelles. En outre, les données primaires peuvent comporter, en plus des données avioniques, ces données opérationnelles.

L'invention et ses avantages apparaîtront avec plus de détails dans le cadre de la description qui suit avec des exemples donnés à titre illustratif en référence aux figures annexées qui représentent :
la figure 1, un schéma illustrant une architecture de surveillance conforme à l'invention, et
la figure 2, un logigramme illustrant un procédé de surveillance d'au moins un aéronef, conformément à l'invention.

Les éléments présents dans plusieurs figures distinctes sont affectés d'une seule et même référence.

Comme déjà évoqué l'invention concerne une architecture de surveillance permettant notamment de réaliser des opérations de maintenance d'au moins un aéronef. Cette architecture permet en outre de traiter des données de maintenance liées à des opérations de maintenance d'un ou plusieurs aéronefs fabriqués par un même fabricant d'aéronef. De tels aéronefs d'une même architecture de surveillance peuvent alors appartenir à un même client ou à plusieurs clients distincts.

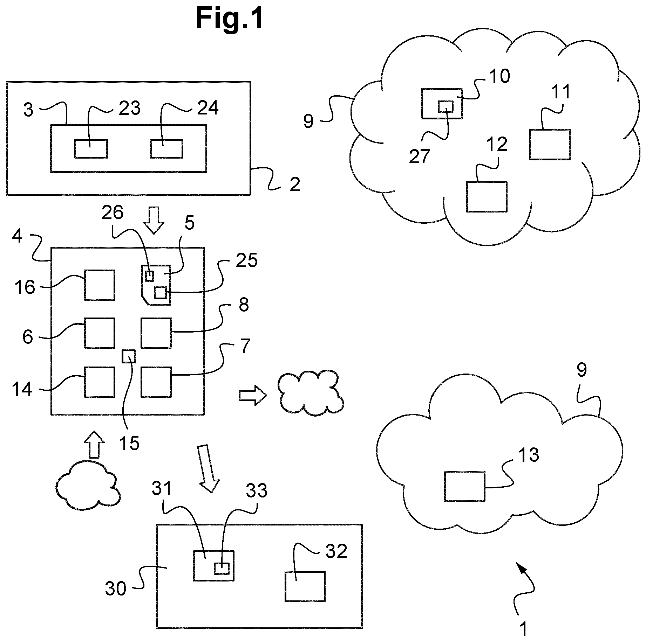

Telle que représentée à la figure 1, une telle architecture 1 comporte alors au moins un aéronef 2 muni d'un système avionique 3. Plusieurs aéronefs 2 peuvent donc faire partie de cette architecture 1 et chaque aéronef 2 comporte alors son propre système avionique 3.

Chaque système avionique 3 permet alors de générer des données avioniques lors d'une utilisation d'un aéronef 2. Ces données avioniques peuvent ensuite être enregistrées lors d'une phase de vol de l'aéronef 2 dans une unité de stockage 23 du système avionique 3. Une telle unité de stockage 23 est donc embarquée à bord de l'aéronef 2.

Par ailleurs, une telle architecture 1 comporte également un équipement électronique mobile 4 pour un ou plusieurs aéronefs 2 qui est muni quant à lui d'une première interface 5 de communication permettant de recevoir des données primaires comportant au moins les données avioniques contenue dans l'unité de stockage 23 et éventuellement des données opérationnelles générées également en vol.

Par ailleurs, l'équipement électronique mobile 4 peut comporter un moyen de saisie 6 configuré pour permettre à un opérateur de saisir au moins une opération de maintenance, cette ou ces opérations de maintenance étant converties par un organe d'analyse en d'autres données opérationnelles.

L'équipement électronique mobile 4 comporte alors une deuxième interface 7 de communication configurée pour émettre les donnés primaires comportant les données avioniques, voire également des données opérationnelles.

Une telle unité de stockage 23 peut être avantageusement amovible par rapport à l'aéronef 2 et au système avionique 3. L'unité de stockage 23 peut alors comprendre par exemple une carte mémoire, une clé à mémoire intégrée, un disque dur amovible. Dans ce cas, la première interface 5 de communication configurée pour recevoir les données avioniques peut être munie d'un lecteur 25 de carte mémoire permettant ainsi de lire les données avioniques contenue dans l'unité de stockage 23.

En parallèle de l'utilisation d'une unité de stockage 23 amovible et d'un lecteur 25 de carte mémoire, chaque système avionique 3 peut éventuellement comporter une sixième interface 24 de communication permettant d'émettre les données primaires. Dans ce cas, la première interface 5 peut comporter au moins une antenne 26 permettant de recevoir selon un protocole de communication sans fil les données primaires émises par la sixième interface 24.

Par ailleurs, une telle architecture 1 comporte également une infrastructure informatique en nuage 9 qui comprend une troisième interface 10 de communication configurée pour recevoir les données primaires émises par la deuxième interface 7.

Cette infrastructure informatique en nuage 9 est également munie; pour chacun des aéronefs 2, d'une mémoire externe 11 propre à un aéronef 2 en particulier. Cette mémoire externe 11 permet en outre de réaliser le stockage d'un historique des données primaires de cet aéronef 2.

Une telle infrastructure informatique en nuage 9 présente alors une unité de traitement 12 permettant de traiter les historiques des données primaires de chaque aéronef 2. Cette unité de traitement 12 permet ainsi de générer des données valorisées à partir des données primaires stockées dans la mémoire externe 11.

Une telle unité de traitement 12 peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Enfin, l'infrastructure informatique en nuage 9 comporte une quatrième interface 13 de communication permettant d'émettre vers l'équipement électronique mobile 4, les données valorisées et l'historique des données primaires contenues dans la mémoire externe 11.

Par suite, pour pouvoir recevoir ces données valorisées et l'historique des données primaires, l'équipement électronique mobile 4 comporte une cinquième interface de communication 14.

L'équipement électronique mobile 4 comporte aussi une mémoire interne 8 permettant le stockage des données valorisées générées par l'unité de traitement 12 de l'infrastructure informatique en nuage 9.

Par ailleurs, l'équipement électronique mobile 4 est également muni d'un organe d'analyse 15 apte à analyser les données valorisées et éventuellement l'historique des données primaires. Enfin, l'équipement électronique mobile 4 comporte un alerteur 16 permettant d'afficher au moins une information de surveillance et ainsi de transmettre à un opérateur au moins un signal sensoriel par exemple visuel, sonore ou vibratoire. Un tel alerteur 16 peut avantageusement comprendre un écran.

En outre, l'organe d'analyse 15 peut comprendre par exemple au moins un processeur et au moins une mémoire, au moins un circuit intégré, au moins un système programmable, au moins un circuit logique, ces exemples ne limitant pas la portée donnée à l'expression « organe d'analyse ». Le terme processeur peut désigner aussi bien une unité centrale de traitement connue sous l'acronyme CPU, une unité graphique de traitement GPU, une unité digitale connue sous l'acronyme DSP, un microcontrôleur...

Par ailleurs, l'organe d'analyse 15 et l'alerteur 16 sont configurés pour mettre en œuvre au moins deux modes de fonctionnement distincts l'un de l'autre, à savoir un mode de fonctionnement local dans lequel l'équipement électronique mobile 4 est déconnecté de l'infrastructure informatique en nuage 9 et un mode de fonctionnement connecté de l'équipement électronique mobile 4.

Dans le mode de fonctionnement local de l'équipement électronique mobile 4, l'organe d'analyse 15 analyse les données valorisées contenues dans la mémoire interne 8 et génère une information de santé de l'aéronef 2 considéré avec lequel il est associé. Un tel organe d'analyse 15 participe ainsi à sécuriser l'aéronef 2. En effet, une telle information de santé consiste ainsi soit en une autorisation de décollage de cet aéronef 2, soit en une interdiction de décollage de l'aéronef 2. L'information de santé constitue dés lors l'information de surveillance affichée par l'alerteur 16. Autrement dit, lorsque cette information de santé est transmise à l'opérateur celui-ci peut ne pas être autorisé à faire décoller l'aéronef 2.

L'opérateur peut alors éventuellement chercher à comprendre la cause de cette interdiction de décollage en plaçant l'équipement électronique mobile 4 dans le mode de fonctionnement connecté de l'équipement électronique mobile 4.

Par ailleurs, dans le mode de fonctionnement connecté de l'équipement électronique mobile 4, l'équipement électronique mobile 4 est connecté à l'infrastructure informatique en nuage 9. L'organe d'analyse 15 est configuré dans ce mode pour analyser les données valorisées contenues dans la mémoire interne 8 et l'historique des données primaires stockées dans la mémoire externe 11. L'organe d'analyse 15 génère alors une information de maintenance prédictive de cet aéronef 2. L'information de maintenance prédictive constitue dés lors l'information de surveillance affichée par l'alerteur 16. Ainsi, une telle information de maintenance prédictive est alors ensuite affichée sur l'alerteur 16 pour être signalée à l'opérateur.

En plus d'une information de maintenance prédictive, l'opérateur peut alors éventuellement également être informé d'une défaillance ou d'une opération de maintenance urgente à effectuer sur l'aéronef 2 interdisant un décollage de celui-ci.

Parallèlement à l'utilisation de l'équipement électronique mobile 4, l'architecture 1 peut également comporter une ou plusieurs stations sol 30 comportant chacune une septième interface 31 de communication. Cette septième interface 31 permet ainsi de recevoir les données primaires émises par la deuxième interface 7 de l'équipement électronique mobile 4.

Une telle septième interface 31 peut quant à elle comporter au moins une antenne sol 33 permettant de recevoir selon un protocole de communication sans fil les données primaires émises par la deuxième interface 7.

En outre, chaque station sol 30 peut avantageusement comporter une huitième interface 32 de communication configurée pour émettre les données primaires et les transmettre à l'infrastructure informatique en nuage 9. Dans ce cas, la troisième interface 10 de l'infrastructure informatique en nuage 9 peut permettre de recevoir également les données primaires émises par la huitième interface 32.

Par ailleurs, cette troisième interface 10 de l'infrastructure informatique en nuage 9 peut par exemple comporter au moins une antenne externe 27 configurée pour recevoir selon un protocole de communication sans fil les données avioniques émises directement par le système avionique 3 au moyen de la sixième interface 24.

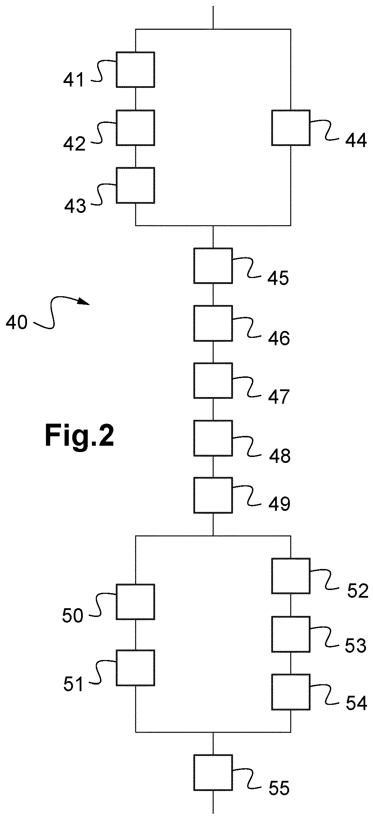

Tel que représenté à la figure 2, l'invention se rapporte également à un procédé 40 de surveillance d'au moins un aéronef 2.

Un tel procédé 40 permet ainsi au moins de traiter des données de maintenance liées aux opérations de maintenance de chaque aéronef 2. Un tel procédé 40 comporte alors les étapes suivantes:
- génération 41 de données avioniques lors d'une utilisation d'au moins un aéronef 2,
- enregistrement 42 des données avioniques dans une unité de stockage 23 embarquée sur chaque aéronef 2,
- transmission 43 de données primaires comportant au moins les données avioniques contenues dans l'unité de stockage 23 vers un équipement électronique mobile 4, tel un smartphone, une tablette, un ordinateur portable ou équivalent,
- transmission 45 des données primaires vers une infrastructure informatique en nuage 9,
- pour chaque aéronef 2, enregistrement 46 dans une mémoire externe 11 de l'infrastructure informatique en nuage 9 d'un historique des données primaires,
- traitement 47 de l'historique des données primaires pour générer des données valorisées,
- transmission 48 des données valorisées depuis l'infrastructure informatique en nuage 9 vers l'équipement électronique mobile 4,
- stockage 49 des données valorisées dans une mémoire interne 8 de l'équipement électronique mobile 4,
- dans un mode de fonctionnement local de l'équipement électronique mobile 4, analyse locale 50 des données valorisées contenues dans la mémoire interne 8 et génération locale 51 d'une information de santé de l'aéronef 2, l'information de santé consistant soit en une autorisation de décollage de l'aéronef 2, soit en une interdiction de décollage de l'aéronef 2,
- dans un mode de fonctionnement connecté de l'équipement électronique mobile 4 durant lequel l'équipement électronique mobile 4 est connecté à l'infrastructure informatique en nuage 9, transmission 52 de l'historique des données primaires contenues dans la mémoire externe 11 vers l'équipement électronique mobile 4, analyse connectée 53 des données valorisées contenues dans la mémoire interne 8 et de l'historique des données primaires stockées dans la mémoire externe 11 et génération connectée 54 d'une information de maintenance prédictive de l'aéronef 2.

Le procédé 40 peut comporter une étape optionnelle de saisie 44 d'au moins une opération de maintenance par un opérateur sur l'équipement électronique mobile 4, cette au moins une opération de maintenance étant convertie en données opérationnelles.

En outre, l'étape de traitement 47 peut comporter par exemple les sous-étapes suivantes :
- lecture des données primaires stockées dans l'unité de stockage embarquée, par exemple une carte mémoire,
- décodage des données primaires pour permettre leur utilisation par un logiciel de valorisation, et
- production des données valorisées en utilisant le logiciel de valorisation comportant un ou plusieurs algorithmes de valorisation.

Enfin, le procédé 40 comporte une étape d'affichage 55 permettant de transmettre à un opérateur au moins une information de surveillance choisie parmi le groupe comportant l'information de santé et l'information de maintenance prédictive. Plus précisément, dans le mode de fonctionnement local la ou les informations transmises à l'opérateur sont la ou les informations de santé tandis que dans le mode de fonctionnement connecté la ou les informations transmises à l'opérateur sont la ou les informations de maintenance prédictive.

## Revendications

1. Architecture (1) de surveillance d'au moins un aéronef (2), ladite architecture (1) comportant :
- ledit au moins un aéronef (2) muni d'un système avionique (3) configuré pour générer des données avioniques lors d'une utilisation dudit au moins un aéronef (2), ledit système avionique (3) comportant une unité de stockage (23) configurée pour stocker lesdites données avioniques,
- un équipement électronique mobile (4) comportant :
- une première interface (5) de communication configurée pour recevoir des données primaires comportant au moins lesdites données avioniques,
- une deuxième interface (7) de communication configurée pour émettre lesdites données primaires,
- une infrastructure informatique en nuage (9) comportant :
- une troisième interface (10) de communication configurée pour recevoir lesdites données primaires émises par ladite deuxième interface (7),
- au moins une mémoire externe (11) stockant un historique desdites données primaires dudit au moins un aéronef (2), chacune desdites au moins une mémoire externe (11) étant associée respectivement à chacun desdits au moins un aéronef (2),
- une unité de traitement (12) configurée pour traiter lesdits historiques desdites données primaires stockées dans ladite au moins une mémoire externe (11), ladite unité de traitement (12) générant des données valorisées, et
- une quatrième interface (13) de communication configurée pour émettre lesdites données valorisées et ledit historique desdites données primaires contenues dans ladite au moins une mémoire externe (11);
ledit équipement électronique mobile (4) comprenant également :
- une cinquième interface de communication (14) configurée pour recevoir lesdites données valorisées et ledit historique desdites données primaires,
- un organe d'analyse (15), et
- un alerteur (16) configuré pour afficher au moins une information de surveillance,
**caractérisée en ce que** l'équipement électronique mobile (4) comporte :
- une mémoire interne (8) configurée pour stocker lesdites données valorisées, et **en ce que** ledit organe d'analyse (15) et ledit alerteur (16) sont configurés pour mettre en œuvre des modes suivants :
- dans un mode de fonctionnement local, ledit organe d'analyse (15) est configuré pour analyser lesdites données valorisées contenues dans ladite mémoire interne (8) et générer, une information de santé dudit au moins un aéronef (2), ladite information de santé consistant soit en une autorisation de décollage dudit au moins un aéronef (2), soit en une interdiction de décollage dudit au moins un aéronef (2), ladite au moins une information de surveillance étant ladite information de santé, et
- dans un mode de fonctionnement connecté dudit équipement électronique mobile (4) durant lequel ledit équipement électronique mobile (4) est connecté à ladite infrastructure informatique en nuage (9), ledit organe d'analyse (15) est configuré pour analyser lesdites données valorisées contenues dans ladite mémoire interne (8) et ledit historique desdites données primaires stockées dans ladite au moins une mémoire externe (11) et pour générer une information de maintenance prédictive dudit au moins un aéronef (2), ladite au moins une information de surveillance étant ladite information de maintenance prédictive.

2. Architecture de surveillance selon la revendication 1, **caractérisée en ce que** ladite unité de stockage (23) dudit système avionique (3) est amovible par rapport audit au moins un aéronef (2).

3. Architecture de surveillance selon la revendication 2,
**caractérisée en ce que** ladite unité de stockage (23) est formée par une carte mémoire, ladite première interface (5) comportant un lecteur (25) de carte mémoire complémentaire avec ladite carte mémoire.

4. Architecture de surveillance selon l'une quelconque des revendications 1 à 3,
**caractérisée en ce que** ledit système avionique (3) comporte une sixième interface (24) de communication configurée pour émettre lesdites données avioniques, ladite première interface (5) comportant une antenne (26) configurée pour recevoir selon un protocole de communication sans fil lesdites données avioniques émises par ladite sixième interface (24).

5. Architecture de surveillance selon l'une quelconque des revendications 1 à 4,
**caractérisée en ce que** ladite architecture (1) comporte au moins une station sol (30) comportant une septième interface (31) de communication configurée pour recevoir lesdites données primaires émises par ladite deuxième interface (7).

6. Architecture de surveillance selon la revendication 5,
**caractérisée en ce que** ladite au moins une station sol (30) comporte une huitième interface (32) de communication configurée pour émettre lesdites données primaires, ladite troisième interface (10) étant configurée pour recevoir lesdites données primaires émises par ladite huitième interface (32).

7. Architecture de surveillance selon l'une quelconque des revendications 1 à 6,
**caractérisée en ce que** ladite septième interface (31) comporte une antenne sol (33) configurée pour recevoir selon un protocole de communication sans fil lesdites données primaires émises par ladite deuxième interface (7).

8. Architecture de surveillance selon l'une quelconque des revendications 1 à 7,
**caractérisée en ce que** ladite troisième interface (10) comporte au moins une antenne externe (27) configurée pour recevoir selon un protocole de communication sans fil lesdites données avioniques émises par ladite sixième interface (24).

9. Architecture de surveillance selon l'une quelconque des revendications 1 à 8,
**caractérisée en ce que** ledit équipement électronique mobile (4) comporte un moyen de saisie (6) configuré pour permettre à un opérateur de saisir au moins une opération de maintenance, ledit organe d'analyse (15) étant configuré pour convertir ladite au moins une opération de maintenance en données opérationnelles.

10. Procédé (40) de surveillance d'au moins un aéronef (2), ledit procédé (40) comportant les étapes suivantes:
- génération (41) de données avioniques lors d'une utilisation dudit au moins un aéronef (2),
- enregistrement (42) desdites données avioniques dans une unité de stockage (23) embarquée sur ledit au moins un aéronef (2),
- transmission (43) de données primaires comportant au moins lesdites données avioniques contenues dans ladite unité de stockage (23) vers un équipement électronique mobile (4),
- transmission (45) des données primaires vers une infrastructure informatique en nuage (9),
- enregistrement (46) dans au moins une mémoire externe (11) de ladite infrastructure informatique en nuage (9) d'un historique desdites données primaires dudit au moins un aéronef (2), chacune desdites au moins une mémoire externe (11) étant associée respectivement à chacun desdits au moins un aéronef (2),
- traitement (47) dudit historique desdites données primaires pour générer des données valorisées, et
- transmission (48) desdites données valorisées depuis ladite infrastructure informatique en nuage (9) vers ledit équipement électronique mobile (4),
**caractérisé en ce que** ledit procédé (40) comporte les étapes suivantes :
- stockage (49) desdites données valorisées dans une mémoire interne (8) dudit équipement électronique mobile (4),
- dans un mode de fonctionnement local dudit équipement électronique mobile (4), analyse locale (50) desdites données valorisées contenues dans ladite mémoire interne (8) et génération locale (51) d'une information de santé dudit au moins un aéronef (2), ladite information de santé consistant soit en une autorisation de décollage dudit au moins un aéronef (2), soit en une interdiction de décollage dudit au moins un aéronef (2),
- dans un mode de fonctionnement connecté dudit équipement électronique mobile (4) durant lequel ledit équipement électronique mobile (4) est connecté à ladite infrastructure informatique en nuage (9), transmission (52) dudit historique desdites données primaires contenues dans ladite au moins une mémoire externe (11) vers ledit équipement électronique mobile (4), analyse connectée (53) desdites données valorisées contenues dans ladite mémoire interne (8) et dudit historique desdites données primaires stockées dans ladite au moins une mémoire externe (11) et génération connectée (54), d'une information de maintenance prédictive dudit au moins un aéronef (2), et
- affichage (55) à un opérateur d'au moins une information de surveillance, dans ledit mode de fonctionnement local ladite au moins une information de surveillance étant ladite information de santé et dans ledit mode de fonctionnement connecté ladite au moins une information de surveillance étant ladite information de maintenance prédictive.

11. Procédé (40) de surveillance d'au moins un aéronef (2) selon la revendication 10,
**caractérisé en ce que** ledit procédé (40) comporte une étape de saisie (44) d'au moins une opération de maintenance par un opérateur sur ledit équipement électronique mobile (4), cette au moins une opération de maintenance étant convertie en données opérationnelles.

12. Procédé (40) de surveillance d'au moins un aéronef (2) selon l'une quelconque des revendications 10 à 11,
**caractérisé en ce que** ladite étape de traitement (47) comporte les sous-étapes suivantes :
- lecture desdites données primaires stockées dans ladite unité de stockage (23),
- décodage desdites données primaires pour permettre leur utilisation par un logiciel de valorisation, et
- production desdites données valorisées en utilisant ledit logiciel de valorisation comportant un ou plusieurs algorithmes de valorisation.

## Patentansprüche

1. Architektur (1) zur Überwachung mindestens eines Luftfahrzeugs (2), wobei die Architektur (1) umfasst:
- das mindestens eine Luftfahrzeug (2), das mit einem Avioniksystem (3) ausgestattet ist, das konfiguriert ist, um bei einem Einsatz des mindestens einen Luftfahrzeugs (2) Avionikdaten zu erzeugen, wobei das Avioniksystem (3) eine Speichereinheit (23) umfasst, die konfiguriert ist, um die Avionikdaten zu speichern,
- eine mobile elektronische Vorrichtung (4) mit:
- einer ersten Kommunikationsschnittstelle (5), die konfiguriert ist, um mindestens die Avionikdaten umfassende Primärdaten zu empfangen,
- einer zweiten Kommunikationsschnittstelle (7), die konfiguriert ist, um die Primärdaten zu senden,
- eine Cloud-Computing-Infrastruktur (9) mit:
- einer dritten Kommunikationsschnittstelle (10), die zum Empfangen der von der zweiten Schnittstelle (7) gesendeten Primärdaten konfiguriert ist,
- - mindestens einem externen Speicher (11), der einen Verlauf der Primärdaten des mindestens einen Luftfahrzeugs (2) speichert, wobei jeder der mindestens einen externen Speicher (11) jeweils einem der mindestens einen Luftfahrzeuge (2) zugeordnet ist,
- einer Verarbeitungseinheit (12), die zum Verarbeiten der in dem mindestens einen externen Speicher (11) gespeicherten Historien der Primärdaten konfiguriert ist, wobei die Verarbeitungseinheit (12) ausgewertete Daten erzeugt, und
- einer vierten Kommunikationsschnittstelle (13), die konfiguriert ist, um die ausgewerteten Daten und die Historie der in dem mindestens einen externen Speicher (11) enthaltenen Primärdaten zu senden;
wobei die mobile elektronische Vorrichtung (4) außerdem umfasst:
- eine fünfte Kommunikationsschnittstelle (14), die konfiguriert ist, um die ausgewerteten Daten und die Historie der Primärdaten zu empfangen,
- eine Analyseeinheit (15) und
- einen Alarmgeber (16), der konfiguriert ist, um mindestens eine Überwachungsinformation anzuzeigen,
**dadurch gekennzeichnet, dass** die mobile elektronische Vorrichtung (4) umfasst:
- einen internen Speicher (8), der zum Speichern der ausgewerteten Daten konfiguriert ist,
und dass die Analyseeinheit (15) und der Alarmgeber (16) zum Ausführen der folgenden Modi konfiguriert sind:
- in einem lokalen Betriebsmodus ist die Analyseeinheit (15) konfiguriert, um die in dem internen Speicher (8) enthaltenen ausgewerteten Daten zu analysieren und eine Gesundheitsinformation des mindestens einen Luftfahrzeugs (2) zu erzeugen, wobei die Gesundheitsinformation entweder in einer Startfreigabe für das mindestens eine Luftfahrzeug (2) oder in einem Startverbot für das mindestens eine Luftfahrzeug (2) besteht, wobei die mindestens eine Überwachungsinformation die Gesundheitsinformation ist, und
- in einem verbundenen Betriebsmodus der mobilen elektronischen Vorrichtung (4), in dem die mobile elektronische Vorrichtung (4) mit der Cloud-Computing-Infrastruktur (9) verbunden ist, ist die Auswerteeinheit (15) konfiguriert, um die in dem internen Speicher (8) enthaltenen ausgewerteten Daten und den Verlauf der in dem mindestens einen externen Speicher (11) gespeicherten Primärdaten zu analysieren und eine vorausschauende Wartungsinformation für das mindestens eine Luftfahrzeug (2) zu erzeugen, wobei die mindestens eine Überwachungsinformation die vorausschauende Wartungsinformation ist.

2. Überwachungsarchitektur nach Anspruch 1,
**dadurch gekennzeichnet, dass** die Speichereinheit (23) des Avioniksystems (3) in Bezug auf das mindestens eine Luftfahrzeug (2) entfernbar ist.

3. Überwachungsarchitektur nach Anspruch 2,
**dadurch gekennzeichnet, dass** die Speichereinheit (23) durch eine Speicherkarte gebildet ist, wobei die erste Schnittstelle (5) einen zu der Speicherkarte komplementären Speicherkartenleser (25) aufweist.

4. Überwachungsarchitektur nach einem der Ansprüche 1 bis 3,
**dadurch gekennzeichnet, dass** das Avioniksystem (3) eine sechste Kommunikationsschnittstelle (24) umfasst, die zum Senden der Avionikdaten konfiguriert ist, wobei die erste Schnittstelle (5) eine zum Empfangen der von der sechsten Schnittstelle (24) gemäß einem drahtlosen Kommunikationsprotokoll gesendeten Avionikdaten konfigurierte Antenne (26) umfasst.

5. Überwachungsarchitektur nach einem der Ansprüche 1 bis 4,
**dadurch gekennzeichnet, dass** die Architektur (1) mindestens eine Bodenstation (30) umfasst, die eine zum Empfangen der von der zweiten Schnittstelle (7) gesendeten Primärdaten konfigurierte siebte Kommunikationsschnittstelle (31) umfasst.

6. Überwachungsarchitektur gemäß Anspruch 5,
**dadurch gekennzeichnet, dass** die mindestens eine Bodenstation (30) eine zum Senden der Primärdaten konfigurierte achte Kommunikationsschnittstelle (32) umfasst, und dass die dritte Schnittstelle (10) zum Empfangen der von der achten Schnittstelle (32) gesendeten Primärdaten konfiguriert ist.

7. Überwachungsarchitektur nach einem der Ansprüche 1 bis 6,
**dadurch gekennzeichnet, dass** die siebte Schnittstelle (31) eine Bodenantenne (33) umfasst, die zum Empfangen der von der zweiten Schnittstelle (7) gesendeten Primärdaten gemäß einem drahtlosen Kommunikationsprotokoll konfiguriert ist.

8. Überwachungsarchitektur nach einem der Ansprüche 1 bis 7,
**dadurch gekennzeichnet, dass** die dritte Schnittstelle (10) mindestens eine externe Antenne (27) umfasst, die zum Empfangen der von der sechsten Schnittstelle (24) gesendeten Avionikdaten gemäß einem drahtlosen Kommunikationsprotokoll konfiguriert ist.

9. Überwachungsarchitektur nach einem der Ansprüche 1 bis 8,
**dadurch gekennzeichnet, dass** die mobile elektronische Vorrichtung (4) ein Eingabemittel (6) umfasst, das konfiguriert ist, um einem Bediener das Eingeben mindestens eines Wartungsvorgangs zu ermöglichen, und dass die Analyseeinheit (15) konfiguriert ist, um den mindestens einen Wartungsvorgang in Betriebsdaten umzuwandeln.

10. Verfahren (40) zur Überwachung mindestens eines Luftfahrzeugs (2), wobei das Verfahren (40) die folgenden Schritte umfasst:
- Erzeugen (41) von Avionikdaten während eines Einsatzes des mindestens einen Luftfahrzeugs (2),
- Speichern (42) der Avionikdaten in einer an Bord des mindestens einen Luftfahrzeugs (2) befindlichen Speichereinheit (23),
- Übertragen (43) von Primärdaten, die mindestens die in der Speichereinheit (23) enthaltenen Avionikdaten umfassen, an eine mobile elektronische Vorrichtung (4),
- Übertragen (45) der Primärdaten an eine Cloud-Computing-Infrastruktur (9),
- Speichern (46) eines Verlaufs der Primärdaten des mindestens einen Luftfahrzeugs (2) in mindestens einem externen Speicher (11) der Cloud-Computing-Infrastruktur (9), wobei jeder der mindestens einen externen Speicher (11) jeweils einem der mindestens einen Luftfahrzeuge (2) zugeordnet ist,
- Verarbeiten (47) des Verlaufs der Primärdaten, um ausgewertete Daten zu erzeugen, und
- Übertragen (48) der ausgewerteten Daten von der Cloud-Computing-Infrastruktur (9) an die mobile elektronische Vorrichtung (4),
**dadurch gekennzeichnet, dass** das Verfahren (40) die folgenden Schritte umfasst:
- Speichern (49) der ausgewerteten Daten in einem internen Speicher (8) der mobilen elektronischen Vorrichtung (4),
- in einem lokalen Betriebsmodus der mobilen elektronischen Vorrichtung (4) lokales Analysieren (50) der in dem internen Speicher (8) enthaltenen ausgewerteten Daten und lokales Erzeugen (51) einer Gesundheitsinformation des mindestens einen Luftfahrzeugs (2), wobei die Gesundheitsinformation entweder aus einer Startfreigabe für das mindestens eine Luftfahrzeug (2) oder aus einem Startverbot für das mindestens eine Luftfahrzeug (2) besteht,
- in einem verbundenen Betriebsmodus der mobilen elektronischen Vorrichtung (4), in dem die mobile elektronische Vorrichtung (4) mit der Cloud-Infrastruktur (9) verbunden ist, Übertragen (52) des Verlaufs der in dem mindestens einen externen Speicher (11) enthaltenen Primärdaten an die mobile elektronische Vorrichtung (4), vernetztes Analysieren (53) der in dem internen Speicher (8) enthaltenen ausgewerteten Daten und des Verlaufs der in dem mindestens einen externen Speicher (11) gespeicherten Primärdaten und vernetztes Erzeugen (54) einer vorausschauenden Wartungsinformation für das mindestens eine Luftfahrzeug (2), und
- Anzeigen (55) mindestens einer Überwachungsinformation für einen Bediener, wobei in dem lokalen Betriebsmodus die mindestens eine Überwachungsinformation die Gesundheitsinformation ist und in dem verbundenen Betriebsmodus die mindestens eine Überwachungsinformation die vorausschauende Wartungsinformation ist.

11. Verfahren (40) zum Überwachen mindestens eines Luftfahrzeugs (2) nach Anspruch 10,
**dadurch gekennzeichnet, dass** das Verfahren (40) einen Schritt (44) des Eingebens mindestens eines Wartungsvorgangs durch einen Bediener an der mobilen elektronischen Vorrichtung (4) umfasst, wobei der mindestens eine Wartungsvorgang in Betriebsdaten umgewandelt wird.

12. Verfahren (40) zum Überwachen mindestens eines Luftfahrzeugs (2) nach einem der Ansprüche 10 bis 11,
**dadurch gekennzeichnet, dass** der Schritt des Verarbeitens (47) die folgenden Teilschritte umfasst:
- Lesen der in der Speichereinheit (23) gespeicherten Primärdaten,
- Decodieren der Primärdaten, um ihre Verwendung durch eine Auswertungssoftware zu ermöglichen, und
- Erzeugen der ausgewerteten Daten unter Verwendung der einen oder mehrere Auswertungsalgorithmen umfassenden Auswertungssoftware.

## Claims

1. Architecture (1) for monitoring at least one aircraft (2), said architecture (1) comprising:
- said at least one aircraft (2) equipped with an avionics system (3) configured to generate avionics data during use of said at least one aircraft (2), said avionics system (3) comprising a storage unit (23) configured to store said avionics data,
- a mobile electronic device (4) comprising:
- a first communication interface (5) configured to receive primary data comprising at least said avionics data,
- a second communication interface (7) configured to emit said primary data,
- a cloud computing infrastructure (9) comprising:
- a third communication interface (10) configured to receive said primary data emitted by said second interface (7),
- at least one external memory (11) storing a history of said primary data of said at least one aircraft (2), each of said at least one external memory (11) being associated respectively with each of said at least one aircraft (2),
- a processing unit (12) configured to process said histories of said primary data stored in said at least one external memory (11), said processing unit (12) generating recycled data, and
- a fourth communication interface (13) configured to emit said recycled data and said history of said primary data contained in said at least one external memory (11);
said mobile electronic device (4) also comprising:
- a fifth communication interface (14) configured to receive said recycled data and said history of said primary data,
- an analysis unit (15), and
- an alerter (16) configured to display at least one item of monitoring information, **characterised in that** the mobile electronic device (4) comprises:
- an internal memory (8) configured to store said recycled data,
and **in that** said analysis unit (15) and said alerter (16) are configured to implement the following modes:
- in a local operating mode, said analysis unit (15) is configured to analyse said recycled data contained in said internal memory (8) and generate an item of health information relating to said at least one aircraft (2), said health information consisting either of a take-off authorisation for said at least one aircraft (2) or a take-off prohibition for said at least one aircraft (2), said at least one item of monitoring information being said health information, and
- in a connected operating mode of said mobile electronic device (4) during which said mobile electronic device (4) is connected to said cloud computing infrastructure (9), said analysis unit (15) is configured to analyse said recycled data contained in said internal memory (8) and said history of said primary data stored in said at least one external memory (11) and to generate an item of predictive maintenance information for said aircraft (2), said at least one item of monitoring information being said predictive maintenance information.

2. Monitoring architecture according to claim 1,
**characterised in that** said storage unit (23) of said avionics system (3) is removable relative to said at least one aircraft (2).

3. Monitoring architecture according to claim 2,
**characterised in that** said storage unit (23) is formed by a memory card, said first interface (5) comprising a memory card reader (25) compatible with said memory card.

4. Monitoring architecture according to any one of claims 1 to 3,
**characterised in that** said avionics system (3) comprises a sixth communication interface (24) configured to emit said avionics data, said first interface (5) comprising an antenna (26) configured to receive, according to a wireless communication protocol, said avionics data emitted by said sixth interface (24).

5. Monitoring architecture according to any one of claims 1 to 4,
**characterised in that** said architecture (1) comprises at least one ground station (30) comprising a seventh communication interface (31) configured to receive said primary data emitted by said second interface (7).

6. Monitoring architecture according to claim 5,
**characterised in that** said at least one ground station (30) comprises an eighth communication interface (32) configured to emit said primary data, said third interface (10) being configured to receive said primary data emitted by said eighth interface (32).

7. Monitoring architecture according to any one of claims 1 to 6,
**characterised in that** said seventh interface (31) comprises a ground antenna (33) configured to receive, according to a wireless communication protocol, said primary data emitted by said second interface (7).

8. Monitoring architecture according to any one of claims 1 to 7,
**characterised in that** said third interface (10) comprises at least one external antenna (27) configured to receive, according to a wireless communication protocol, said avionics data emitted by said sixth interface (24).

9. Monitoring architecture according to any one of claims 1 to 8,
**characterised in that** said mobile electronic device (4) comprises an input means (6) configured to allow an operator to input at least one maintenance operation, said analysis unit (15) being configured to convert said at least one maintenance operation into operational data.

10. Method (40) for monitoring at least one aircraft (2), said method (40) comprising the following steps:
- generating (41) avionics data during use of said at least one aircraft (2),
- recording (42) said avionics data in a storage unit (23) on board said at least one aircraft (2),
- transmitting (43) primary data comprising at least said avionics data contained in said storage unit (23) to a mobile electronic device (4),
- transmitting (45) primary data to a cloud computing infrastructure (9),
- recording (46) a history of said primary data of said at least one aircraft (2) in at least one external memory (11) of said cloud computing infrastructure (9), each of said at least one external memory (11) being associated respectively with each of said at least one aircraft (2),
- processing (47) said history of said primary data in order to generate recycled data, and
- transmitting (48) said recycled data from said cloud computing infrastructure (9) to said mobile electronic device (4),
**characterised in that** said method (40) comprises the following steps:
- storing (49) said recycled data in an internal memory (8) of said mobile electronic device (4),
- in a local operating mode of said mobile electronic device (4), locally analysing (50) said recycled data contained in said internal memory (8) and locally generating (51) an item of health information relating to said at least one aircraft (2), said health information consisting either of a take-off authorisation for said at least one aircraft (2) or a take-off prohibition for said at least one aircraft (2),
- in a connected operating mode of said mobile electronic device (4) during which said mobile electronic device (4) is connected to said cloud computing infrastructure (9), transmitting (52) said history of said primary data contained in said at least one external memory (11) to said mobile electronic device (4), connectedly analysing (53) said recycled data contained in said internal memory (8) and said history of said primary data stored in said at least one external memory (11), and connectedly generating (54) an item of predictive maintenance information for said at least one aircraft (2), and
- displaying (55) at least one item of monitoring information to an operator, wherein, in said local operating mode, said at least one item of monitoring information being said health information and, in said connected operating mode, said at least one item of monitoring information being said predictive maintenance information.

11. Method (40) for monitoring at least one aircraft (2) according to claim 10,
**characterised in that** said method (40) comprises a step in which an operator inputs (44) at least one maintenance operation on said mobile electronic device (4), this at least one maintenance operation being converted into operational data.

12. Method (40) for monitoring at least one aircraft (2) according to any one of claims 10 to 11,
**characterised in that** said processing step (47) comprises the following sub-steps:
- reading said primary data stored in said storage unit (23),
- decoding said primary data for use by recycling software, and
- producing said recycled data using said recycling software comprising one or more recycling algorithms.
